(19) **Europäisches Patentamt / European Patent Office / Office européen des brevets**

(11) **EP 2 040 249 A1**

(12) # EUROPÄISCHE PATENTANMELDUNG

(43) Veröffentlichungstag:
**25.03.2009   Patentblatt 2009/13**

(51) Int Cl.:
**G10L 15/10** (2006.01)     **G10L 15/06** (2006.01)

(21) Anmeldenummer: **07116840.5**

(22) Anmeldetag: **20.09.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Siemens Aktiengesellschaft Österreich**
**1210 Wien (AT)**

(72) Erfinder: **Tschirk, Wolfgang**
**1150 Wien (AT)**

Bemerkungen:
Geänderte Patentansprüche gemäss Regel 137(2) EPÜ.

(54) **Selbstoptimierendes Verfahren zur Spracherkennung**

(57)   Die Erfindung betrifft ein Verfahren zur Optimierung von Spracherkennungsprozessen, wobei bei jedem Erkennungsvorgang ein für den jeweiligen Erkennungsvorgang vorgebbares Fehlerkriterium minimiert wird und wobei die konkreten Verwechslungswahrscheinlichkeiten aller möglichen Wortpaarungen zur Optimierung herangezogen werden. Somit ist eine auf die konkrete Anwendung hin optimierbare Spracherkennung möglich, welche die Häufigkeiten der jeweils kritischsten Fehlerarten minimiert.

Fig. 1

EP 2 040 249 A1

**Beschreibung**

Technisches Gebiet

Die Erfindung betrifft ein Verfahren zur Optimierung von Spracherkennungsprozessen, wobei bei jedem Erkennungsvorgang ein für den jeweiligen Erkennungsvorgang vorgebbares Fehlerkriterium minimiert wird und wobei die konkreten Verwechslungswahrscheinlichkeiten aller möglichen Wortpaarungen zur Optimierung herangezogen werden.

Stand der Technik

Beim Einsatz automatischer Spracherkennungssysteme, beispielsweise zur Umwandlung gesprochener Kommandos in elektrische Steuerungsbefehle, wird der Anwender mit dem Problem konfrontiert, dass der Erkennungsvorgang mit einer bestimmten Wahrscheinlichkeit fehlerhafte Ergebnisse liefern wird. Diese fehlerhaften Ergebnisse sind: das Verwechseln von Befehlen, das fälschliche Rückweisen von Befehlen und das fälschliche Akzeptieren von Störsignalen als Befehle.

Die jeweiligen Wahrscheinlichkeiten für ein Auftreten eines der genannten Fehler hängen voneinander ab, eine geringe Falschrückweisungsrate bedingt meist eine hohe Falschakzeptanzrate und oft auch eine höhere Verwechslungsrate, umgekehrt führt die Forderung nach einer geringen Falschakzeptanzrate auch zu einer höheren Falschrückweisungsrate.

Je nach Anwendungsfall soll nun das Verhältnis der genannten Fehlerarten zueinander optimiert werden. So besteht insbesondere bei Steuerungsaufgaben in lauter Umgebung die Forderung, dass lediglich Kommandos des Benutzers zu einem Steuerungsbefehl führen und die Umgebungsgeräusche mit hoher Zuverlässigkeit zurückgewiesen werden. Hier wird im Interesse einer geringen Falschakzeptanzrate auch eine höhere Falschrückweisungsrate akzeptiert, während bei anderen Anwendungen, bei denen der Komfort des Benutzers im Vordergrund steht, die Falschrückweisungsrate niedrig sein soll und dafür eine höhere Falschakzeptanzrate in Kauf genommen wird.

In "WO2005/059896A1" ist ein Verfahren beschrieben, mit welchem Spracherkennungsprozesse auf den jeweiligen Anwendungsfall hin optimiert werden können, indem vorgegeben werden kann, welche der drei Fehlerarten (Falschakzeptanz, Falschrückweisung und Verwechslung) im jeweiligen Anwendungsfall besonders gravierende Auswirkungen haben und entsprechende Fehler möglichst nicht auftreten sollen. Das in "WO2005/059896A1" offenbarte Verfahren bildet dazu für den jeweiligen Erkennungsvorgang eine Teilmenge aus allen vom Spracherkennungsprozess erkennbaren Wörtern, wobei in dieser Teilmenge jedenfalls alle im jeweils aktuellen Erkennungsvorgang zulässigen Wörter erfasst sind, reiht diese nach der ermittelten Trefferwahrscheinlichkeit und bestimmt eine maximale Anzahl an höchstgereihten Wörtern, aus welchen ein Treffer erkannt werden soll. Das in "WO2005/059896A1" offenbarte Verfahren wählt bei jedem Erkennungsvorgang aus dieser Teilmenge das Wort aus, welches innerhalb der bestimmten maximalen Anzahl an zu untersuchenden Wörten am höchsten gereiht ist und in der Menge der für den jeweiligen Erkennungsvorgang zulässigen Wörter liegt. Dieses Verfahren berücksichtigt allerdings nicht, dass im allgemeinen die Verwechslungswahrscheinlichkeiten zwischen allen Paarungen aller erkennbaren Wörter unterschiedlich sind, sondern nimmt eine für alle möglichen Wortpaarungen gleiche Verwechslungswahrscheinlichkeit an.

Darstellung der Erfindung

Der Erfindung liegt die Aufgabe zugrunde, ein Verfahren anzugeben, mit dem die Eigenschaften eines Spracherkennungsverfahrens hinsichtlich seiner Fehlerarten anwendungsbezogen optimiert werden können, wobei die konkreten Verwechslungswahrscheinlichkeiten aller möglichen Wortpaarungen zur Optimierung herangezogen werden. Diese konkreten Verwechslungswahrscheinlichkeiten aller möglichen Wortpaarungen werden typischerweise experimentell ermittelt.

Erfindungsgemäß wird diese Aufgabe mit einem Verfahren der eingangs genannten Art gelöst, bei dem eine erste Teilmenge von Wörtern gegeben ist, die beim jeweiligen Erkennungsvorgang zugelassen sind, und eine zweite Teilmenge von Wörtern ausgewählt wird, welche den Wortschatz der ersten Teilmenge und zusätzlich ausgewählte Wörter der Gesamtmenge umfasst und bei dem die zu den Wörtern der zweiten Teilmenge gebildeten Hypothesen nach der ermittelten Trefferwahrscheinlichkeit gereiht werden und aus einer vorbestimmten Anzahl der erstgereihten Hypothesen der wahrscheinlichste Treffer ermittelt wird. Das erfindungsgemäße Optimierungsverfahren ermittelt jene Wörter der Gesamtmenge, welche gemeinsam mit den Wörtern, welche den für den jeweiligen Erkennungsvorgang zulässig sind (erste Teilmenge) die zweite Teilmenge bilden und die Anzahl der erstgereihten Hypothesen, aus welchen der wahrscheinlichste Treffer ermittelt wird.

Die Erfindung ermöglicht den optimierten Einsatz eines Spracherkennungssystems mit einem gegebenen Erkennungsverhalten. Durch die geeignete Wahl der zweiten Teilmenge und der Anzahl der erstgereihten Hypothesen optimiert das erfindungsgemäße Vefahren das Verhältnis der oben genannten Fehlerarten unter Berücksichtung der vorgebbaren Gewichtungen der einzelnen Fehlerarten.

So kann beispielsweise in erfahrungsgemäß lauten Situationen die Falschakzeptanzrate besonders niedrig gewählt werden.

Vorteilhafte Ausgestaltungen der Erfindung ergeben sich aus den Unteransprüchen.

Günstig ist es dabei insbesondere, wenn die Größe der zweiten Teilmenge und die Anzahl der erstgereihten Hypothesen, aus denen der wahrscheinlichste Treffer ermittelt wird, sowie die Elemente, welche aus dem Gesamtwortschatz ausgewählt werden und welche zusammen mit der ersten Teilmenge die zweite Teilmenge bilden, mittels Optimierungsverfahren für jeden Erkennungsvorgang festgelegt werden.

Vorteilhaft ist es weiterhin, wenn für jeden Erkennungsvorgang ein eigenes Optimierungskriterium gewählt wird.

Günstig ist es auch, wenn eines der Wörter jeder Menge nicht einem Befehl, sondern der Gesamtheit der möglichen Störsignale entspricht.

Das erfindungsgemäße Verfahren erlaubt die Verbesserung bestehender Spracherkennungssysteme mit geringem Aufwand, da das erfindungsgemäße Verfahren in einer externen, vom eigentlichen Spracherkenner getrennten Steuerlogik ausgeführt wird. Bestehende Spracherkenner sind somit durch das erfindungsgemäße Verfahren verbesserbar und auf den jeweiligen Einsatz besser abstimmbar.

Eine weitere Ausführungsform der Erfindung sieht vor, das der Erfindung zugrundeliegende Optimierungsverfahren um den Parameter der Wahrscheinlichkeit des Vorkommens jedes einzelnen erkennbaren Wortes zu erweitern.

Kurzbeschreibung der Zeichnung

Die Erfindung wird anhand einer Figur näher erläutert, welche die wesentlichen Größen der mathematischen Grundlagen des erfindungsgemäßen Verfahrens darstellt.

**Fig. 1** Darstellung der Wortmengen $V_0$, $S_0$, $E_0$
**Fig. 2** Matrix der Verwechslungswahrscheinlichkeiten $c_k^i$, beispielhaft an einer 8x8 Matrix dargestellt

Ausführung der Erfindung

Nach dem Stand der Technik wird bei einem Verfahren zur Optimierung von Spracherkennungsprozessen bei jedem Erkennungsvorgang zu jedem Wort der Gesamtmenge **V** der von dem Spracherkennungsprozess erfassten Wörter, deren Anzahl gleich V sei und die durch ein Umgebungsgeräusch-Muster, welches ein eigenes Wort (Geräuschwort) darstellt, zu einer Menge $V_0$ ergänzt wird, eine Trefferwahrscheinlichkeitshypothese ermittelt. Das wahrscheinlichste Ergebnis, der Treffer, wird nun entweder aus der Gesamtzahl der Hypothesen oder aus einer ersten Teilmenge $S_0$ dieser Hypothesen, die S Wörter und ein Umgebungsgeräusch-Muster enthält, ermittelt, wie beispielsweise auch in dem in W. Tschirk, "Neural Net Speech Recognizers. Voice Remote Control Devices for Disabled People," e&i Artificial Intelligence 7/8/2001, pp.367-370,2001, beschriebenen System.

Zum Beispiel werden bei einem Spracherkennungssystem, welches zur Steuerung der Beleuchtung, der Heizung und des Telephonapparates in einer Wohnung herangezogen wird, nachdem mit einem ersten Kommando die Auswahl der "HEIZUNG" erfolgt ist, beim nächsten Schritt nur mehr die Wörter "WÄRMER" oder "KÄLTER" akzeptiert, nicht aber beispielsweise die Wörter "HELLER" oder "DUNKLER", welche in dieser Situation keinen sinnvollen Steuerbefehl ergeben.

Die Wörter "WÄRMER" und "KÄLTER" bilden daher in dieser Situation mit dem Muster "Umgebungsgeräusch" die erste Teilmenge $S_0$ der Wahrscheinlichkeits-Hypothesen.

Erfindungsgemäß wird nun eine zweite Teilmenge **E** von E Wörtern ausgewählt, welche den Wortschatz der ersten Teilmenge und zusätzliche, durch Optimierung ausgewählte Wörter der Gesamtmenge $V_0$ umfasst und mit dem Muster des Umgebungsgeräusches (Geräuschwort) ergänzt zu $E_0$.

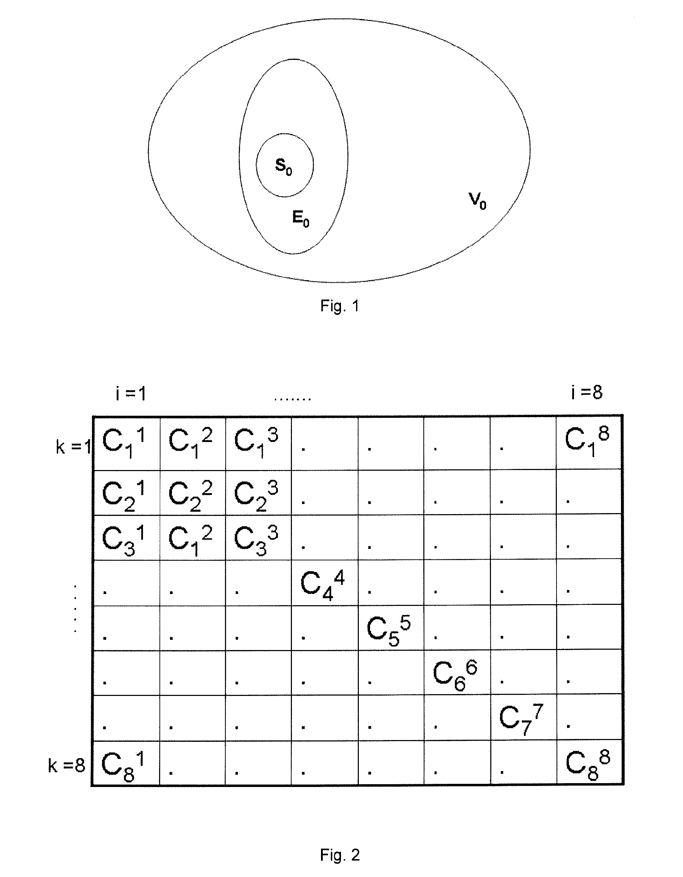

**Fig.1** stellt schematisch die Mengen $V_0$, $S_0$, und $E_0$ dar.

Die bei einem Erkennungsvorgang zu den Wörtern der zweiten Teilmenge $E_0$ gebildeten Hypothesen werden nach der ermittelten Trefferwahrscheinlichkeit gereiht und aus einer durch Optimierung bestimmten Anzahl H der erstgereihten Hypothesen wird der wahrscheinlichste Treffer ermittelt.

Durch geeignete Wahl der Wörter von zweiter Teilmenge **E** bzw. ergänzter zweiter Teilmenge $E_0$ und der Anzahl H der erstgereihten Hypothesen kann nun die Eigenschaft des Spracherkennungsverfahrens hinsichtlich des Verhältnisses von Falschrückweisungsrate R, Falschakzeptanzrate A und Verwechslungsrate C an die jeweilige Situation angepasst werden. Dazu bestimmt das erfindungsgemäße Verfahren die dazu optimalen Wörter der zweiten Teilmenge **E** und die Anzahl der erstgereihten Hypothesen H.

Im folgenden wird nun ein vorteilhaftes Optimierungsverfahren näher erläutert. Dazu werden die dazu optimalen Wörter der zweiten Teilmenge **E** und die Anzahl der erstgereihten Hypothesen H als Funktionen von Falschrückweisungsrate R, Falschakzeptanzrate A und Verwechslungsrate C dargestellt.

Dazu werden die Eigenschaften des Spracherkenners in Form einer Matrix der Verwechslungswahrscheinlichkeiten $c_k^i$ dargestellt. Diese Matrix der Verwechslungswahrscheinlichkeiten (beispielhaft in **Fig.2** dargestellt) zeigt die Wahrscheinlichkeiten dafür, dass ein bestimmtes Wort k vom Spracherkenner als ein bestimmtes Wort i erkannt wird. Die Matrix der Verwechslungswahrscheinlichkeiten besitzt die identische Anzahl an Zeilen und Spalten, die Anzahl der Zeilen bzw. Spalten ist gleich der vom Spracherkenner erkennbaren Wörter (Wortschatz des Spracherkenners). Erfindungsgemäß wird diese Matrix der Verwechslungswahrscheinlichkeiten um eine weitere Zeile und Spalte erweitert, welche das Muster "Umgebungsgeräusch" (Geräuschwort) als weiteres vom Spracherkenner erkennbares Wort einbringt. Eine so erweiterte Matrix der Verwechslungswahrscheinlichkeiten stellt die Verwechslungswahrscheinlichkeiten aller Wörter der Menge $\mathbb{V}_0$ dar.

Die Aufgabe des Verfahrens ist es, die Wörter der Menge **E** und die Anzahl H der Hypothesen zu bestimmen. Dazu wird eine Optimierung gemäß

$$(\mathbb{E},H)_{opt} = \underset{(\mathbb{E},H)}{argmin}\ O(C_k, R_k, A_k)$$

durchgeführt, wobei eine beliebige zu minimierende Funktion O (Fehlerkriterium) auf die einzelnen Fehlerwahrscheinlichkeiten $C_k$ (Verwechslungsrate), $R_k$ (Falschrückweisungsrate) und $A_k$ (Falschakzeptanzrate) für alle Wörter, deren jeweilige Nummer k ist, angewandt wird. Im Fall, dass die Wahrscheinlichkeiten des Vorkommens aller Wörter in die Optimierung einbezogen werden, erweitert sich die Formel zu

$$(\mathbb{E},H)_{opt} = \underset{(\mathbb{E},H)}{argmin}\ O(e_k, C_k, R_k, A_k)$$

wobei $e_k$ die Wahrscheinlichkeit des Vorkommens des Wortes mit der Nummer k aus dem Sprachumfang des Spracherkenners darstellt.

Da bei jedem Erkennungsvorgang nur eine Teilmenge des Sprachumfangs relevant ist (Wortmenge $\mathbb{S}_0$) können die zu betrachtenden Wörter eingeschränkt werden. Wenn der Benutzer keinen unzulässigen Befehl gibt, so kann der Spracherkenner nur ein gültiges Wort (aus der Wortmenge **S**) oder das "Geräuschwort" empfangen, also nur die Fehler der Falschakzeptanz des Geräuschwortes oder die Verwechslung bzw. Falschrückweisung eines gültigen Wortes begehen. Das Optimierungskriterium stellt sich demgemäß folgendermaßen dar:

$$(\mathbb{E},H)_{opt} = \underset{(\mathbb{E},H)}{argmin}\ O(C_k, R_k \mid k \in \mathbb{S};\ A_k \mid k \in \mathbb{G})$$

wobei **G** die Menge der Geräuschwörter ist und für den Zweck der Erfindung nur ein einziges Element besitzen muss, bzw. bei Berücksichtigung der absoluten Häufigkeiten aller Wörter:

$$(\mathbb{E},H)_{opt} = \underset{(\mathbb{E},H)}{argmin}\ O(e_k \mid k \in \mathbb{S}_0;\ C_k, R_k \mid k \in \mathbb{S};\ A_k \mid k \in \mathbb{G})$$

Dazu ist die Berechnung der drei Fehlerraten $C_k$ (Verwechslungsrate), $R_k$ (Falschrückweisungsrate) und $A_k$ (Falschakzeptanzrate) erforderlich. Diese werden folgendermaßen bestimmt:

$$C_k = \sum_{n=1}^{H} p_{kn}^{\mathbb{S}-k} \prod_{m=0}^{n-1} p_{km}^{\mathbb{E}'} \qquad k \in \mathbb{S}$$

für

$$R_k = \sum_{n=1}^{H} p_{kn}^{\mathbb{G}} \prod_{m=0}^{n-1} p_{km}^{\mathbb{E}'} + \prod_{n=1}^{H} p_{kn}^{\mathbb{E}'} \qquad k \in \mathbb{S}$$

für

$$A_k = \sum_{n=1}^{H} p_{kn}^{\mathbb{S}} \prod_{m=0}^{n-1} p_{km}^{\mathbb{E}'} \qquad k \in \mathbb{G}$$

für

Wobei

*k* die Klasse des empfangenen Wortes darstellt,

(*h₁,...,h₍ᵥ₊₁₎*) die nach Wahrscheinlichkeit gereihte Ergebnisliste des Spracherkenners als Ausgang eines Spracherkennungsvorgangs ist, wobei die erste Hypothese h₁ das wahrscheinlichste Wort angibt, die zweite Hypothese h₂ das zweit wahrscheinlichste Wort usw.,

**S-*k*** die Menge **S** ohne das Element k darstellt

**E'** die Menge **E** ohne die Elemente der Menge **S** darstellt

**G** die Menge der Geräuschwörter darstellt

$p_{kn}^{\mathbb{S}-k}$, $p_{kn}^{\mathbb{E}'}$, $p_{kn}^{\mathbb{G}}$ die Wahrscheinlichkeiten dafür sind, dass, wenn das Element hₙ der Ergebnisliste des Spracherkenners betrachtet wird, es jeweils in der Menge **S-*k*, E'**bzw. **G** liegt.

Die Wahrscheinlichkeiten p für die erste Hypothese h₁ berechnen sich gemäß

$$p_{k1}^{\mathbb{S}-k} = \sum_{i \in \mathbb{S}-k} \gamma_k^i$$

$$p_{k1}^{\mathbb{E}'} = \sum_{i \in \mathbb{E}'} \gamma_k^i$$

$$p_{k1}^{\mathbb{G}} = \sum_{i \in \mathbb{G}} \gamma_k^i$$

wobei die Matrix der Verwechslungswahrscheinlichkeiten $c_k^i$ zur Berechnung der $\gamma_k^i$ herangezogen wird:

$$\gamma_k^j = \frac{c_k^j}{\sum\limits_{j \in \mathbb{E}_0} c_k^j}$$

Weiters sind für jedes außer dem erstgereihten Wort der Ergebnisliste des Spracherkenners die Wahrscheinlichkeiten dafür, dass es in einer der Mengen **S-*k*, E'** oder **G** liegt, zu bestimmen.

Damit die n-te Hypothese $h_n$ überhaupt betrachtet wird, müssen die ersten n-1 Hypothesen $h_1$ bis $h_{n-1}$ in **E'** liegen. Es bezeichne **H$^{n-1}$** die Menge aller Folgen von n-1 aufeinander folgenden Hypothesen und **h** eine solche Folge $(h_1,...h_{n-1})$. Mit den Hilfsgrößen

$$\rho_{km}^{\mathbf{h}} := \begin{cases} 1 & \text{if } m = 1 \\ \frac{1}{1 - \sum\limits_{j=1}^{m-1} \gamma_k^{h_j}} & \text{if } m > 1 \end{cases}$$

ergibt sich die Wahrscheinlichkeit dafür, dass $h_n$ betrachtet wird, dass also die Hypothesen $h_1$ bis $h_{n-1}$ in E' liegen, zu

$$P_{kn} = \sum_{\mathbf{h} \in \mathbb{H}^{n-1}} \prod_{m=1}^{n-1} \rho_{km}^{\mathbf{h}} \gamma_k^{h_m}$$

und mit den Hilfsgrößen

$$P_{kn}^{\mathbf{h}} := \rho_{kn}^{\mathbf{h}} \prod_{m=1}^{n-1} \rho_{km}^{\mathbf{h}} \gamma_k^{h_m}$$

ergeben sich die Wahrscheinlichkeiten dafür, dass die n-te Hypothese $h_n$, falls sie betrachtet wird, in **S-*k*, E'** bzw. **G** liegt:

$$P_{kn}^{\mathbb{S}-k} = \frac{\sum\limits_{\mathbf{h} \in \mathbb{H}^{n-1}} P_{kn}^{\mathbf{h}} \sum\limits_{i \in \mathbb{S}-k} \gamma_k^i}{P_{kn}},$$

$$P_{kn}^{\mathbb{E}'} = \frac{\sum\limits_{\mathbf{h} \in \mathbb{H}^{n-1}} P_{kn}^{\mathbf{h}} \sum\limits_{i \in \mathbb{E}' \setminus \{h_1,...,h_{n-1}\}} \gamma_k^i}{P_{kn}}$$

$$p_{km}^{\mathbb{G}} = \frac{\sum\limits_{\mathbf{h} \in \mathbb{H}^{n-1}} P_{km}^{\mathbf{h}} \sum\limits_{i \in \mathbb{G}} \gamma_k^i}{P_{km}}$$

## Patentansprüche

1. Selbstoptimierendes Verfahren zur Spracherkennung, wobei bei jedem Erkennungsvorgang zu jedem Wort der Gesamtmenge (**V**) der von dem Spracherkennungsprozess erfassten Wörter eine TrefferwahrscheinlichkeitsHypothese ermittelt wird und wobei aus der Gesamtmenge eine erste Teilmenge (**S**) ausgewählt wird, welche einen für diesen Erkennungsvorgang zulässigen Wortschatz umfasst, und eine zweite Teilmenge (**E**) von Wörtern ausgewählt wird, welche den Wortschatz der ersten Teilmenge und zusätzliche ausgewählte Wörter der Gesamtmenge (**V**) umfasst, und dass die zu den Wörtern der zweiten Teilmenge gebildeten Hypothesen nach der ermittelten Trefferwahrscheinlichkeit gereiht werden und aus einer bestimmten Anzahl (H) der erstgereihten Hypothesen der wahrscheinlichste Treffer ermittelt wird, **dadurch gekennzeichnet, dass** die Wörter der zweiten Teilmenge (**E**) und die Anzahl (H) der erstgereihten Hypothesen, aus denen der wahrscheinlichste Treffer ermittelt wird, mittels Optimierungsverfahren festgelegt werden und wobei eine für den jeweiligen Erkennungsvorgang frei wählbare Funktion von Falschrückweisungsrate, Falschakzeptanzrate und Verwechslungsrate optimiert wird und zur Optimierung die paarweisen Verwechslungswahrscheinlichkeiten ($c_k^i$) zwischen je zwei Wörtern aus der Gesamtmenge (**V**) oder zwischen einem Wort aus der Gesamtmenge (**V**) und der Gesamtheit aller nicht zu (**V**) gehörenden Laute herangezogen wird.

2. Verfahren nach Anspruch 1, **dadurch gekennzeichnet, dass** die Elemente der zweiten Teilmenge (**E**) und die Anzahl (H) der erstgereihten Hypothesen, aus denen der wahrscheinlichste Treffer ermittelt wird, mittels Optimierungsverfahren für jeden Erkennungs-vorgang festgelegt werden.

3. Verfahren nach einem der Ansprüche 1 oder 2, **dadurch gekennzeichnet, dass** eines der Wörter jeder Menge nicht einem Befehl, sondern der Gesamtheit der möglichen Störsignale entspricht.

4. Verfahren nach einem der Ansprüche 1 bis 3, **dadurch gekennzeichnet, dass** ein Optimierungsverfahren eingesetzt wird, welches eine für den jeweiligen Erkennungsvorgang frei wählbare Funktion von Falschrückweisungsrate, Falschakzeptanzrate und Verwechslungsrate und Häufigkeit jedes Wortes optimiert und zur Optimierung die paarweisen Verwechslungswahrscheinlichkeiten ($c_k^i$) zwischen je zwei Wörtern aus der Gesamtmenge (**V**) oder zwischen einem Wort aus der Gesamtmenge (**V**) und der Gesamtheit aller nicht zu (**V**) gehörenden Laute heranzieht.

## Geänderte Patentansprüche gemäss Regel 137(2) EPÜ.

1. Selbstoptimierendes Verfahren zur Spracherkennung, wobei bei jedem Erkennungsvorgang zu jedem Wort der Gesamtmenge (**V**) der von dem Spracherkennungsprozess erfassten Wörter eine Trefferwahrscheinlichkeits-Hypothese ermittelt wird und wobei aus der Gesamtmenge eine erste Teilmenge (**S**) ausgewählt wird, welche einen für diesen Erkennungsvorgang zulässigen Wortschatz umfasst, und eine zweite Teilmenge (**E**) von Wörtern ausgewählt wird, welche den Wortschatz der ersten Teilmenge und zusätzliche ausgewählte Wörter der Gesamtmenge (**V**) umfasst, und dass die zu den Wörtern der zweiten Teilmenge gebildeten Hypothesen nach der ermittelten Trefferwahrscheinlichkeit gereiht werden und aus einer bestimmten Anzahl (H) der erstgereihten Hypothesen der wahrscheinlichste Treffer ermittelt wird, **dadurch gekennzeichnet, dass** die Wörter der zweiten Teilmenge (**E**) und die Anzahl (H) der erstgereihten Hypothesen, aus denen der unter Berücksichtigung der paarweisen Verwechslungswahrscheinlichkeiten ($c_k^1$) zwischen je zwei Wörtern aus der Gesamtmenge (**V**) oder zwischen einem Wort aus der Gesamtmenge (**V**) und der Gesamtheit aller nicht zu (**V**) gehörenden Laute sowie des Umfangs des Umfangs der ersten Teilmenge (**S**) wahrscheinlichste Treffer ermittelt wird, mittels Optimierungsverfahren festgelegt werden und wobei eine für den jeweiligen Erkennungsvorgang frei wählbare Funktion von Falschrückweisungsrate, Falschakzeptanzrate und Verwechslungsrate optimiert wird und zur Optimierung die paarweisen Verwechslungswahrscheinlichkeiten ($c_k^i$) zwischen je zwei Wörtern aus der Gesamtmenge (**V**) oder zwischen einem Wort aus der Gesamtmenge **(V)** und der Gesamtheit aller nicht zu **(V)** gehörenden Laute herangezogen wird.

**2.** Verfahren nach Anspruch 1, **dadurch gekennzeichnet, dass** die Elemente der zweiten Teilmenge **(E)** und die Anzahl (H) der erstgereihten Hypothesen, aus denen der wahrscheinlichste Treffer ermittelt wird, mittels Optimierungsverfahren für jeden Erkennungs-vorgang festgelegt werden.

**3.** Verfahren nach einem der Ansprüche 1 oder 2, **dadurch gekennzeichnet, dass** eines der Wörter jeder Menge nicht einem Befehl, sondern der Gesamtheit der möglichen Störsignale entspricht.

**4.** Verfahren nach einem der Ansprüche 1 bis 3, **dadurch gekennzeichnet, dass** ein Optimierungsverfahren eingesetzt wird, welches eine für den jeweiligen Erkennungsvorgang frei wählbare Funktion von Falschrückweisungsrate, Falschakzeptanzrate und Verwechslungsrate und Häufigkeit jedes Wortes optimiert und zur Optimierung die paarweisen Verwechslungswahrscheinlichkeiten ($c_k^i$) zwischen je zwei Wörtern aus der Gesamtmenge **(V)** oder zwischen einem Wort aus der Gesamtmenge **(V)** und der Gesamtheit aller nicht zu **(V)** gehörenden Laute heranzieht.

Fig. 1

$i = 1$ ........ $i = 8$

| | | | | | | | |
|---|---|---|---|---|---|---|---|
| $k = 1$ $C_1{}^1$ | $C_1{}^2$ | $C_1{}^3$ | . | . | . | . | $C_1{}^8$ |
| $C_2{}^1$ | $C_2{}^2$ | $C_2{}^3$ | . | . | . | . | . |
| $C_3{}^1$ | $C_1{}^2$ | $C_3{}^3$ | . | . | . | . | . |
| . | . | . | $C_4{}^4$ | . | . | . | . |
| . | . | . | . | $C_5{}^5$ | . | . | . |
| . | . | . | . | . | $C_6{}^6$ | . | . |
| . | . | . | . | . | . | $C_7{}^7$ | . |
| $k = 8$ $C_8{}^1$ | . | . | . | . | . | . | $C_8{}^8$ |

Fig. 2

**Europäisches Patentamt**

**EUROPÄISCHER RECHERCHENBERICHT**

Nummer der Anmeldung

EP 07 11 6840

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TSCHIRK W: "SELF-OPTIMIZING VOICE CONTROL USER INTERFACE" EUROPEAN CONFERENCE FOR SIGNAL PROCESSING (EUSIPCO), 6. September 2004 (2004-09-06), - 10. September 2004 (2004-09-10) Seiten 325-328, XP002478276 WIEN, AT * Zusammenfassung * * Abschnitte 1, 2, 4 * ----- | 1-4 | INV. G10L15/10 G10L15/06 |
| D,X | WO 2005/059896 A (SIEMENS AG OESTERREICH [AT]; TSCHIRK WOLFGANG [AT]) 30. Juni 2005 (2005-06-30) * Zusammenfassung * * Seite 3, Zeile 20 - Seite 4, Zeile 32 * * Seite 5, Zeile 4 - Seite 6, Zeile 21 * * Abbildung 1 * ----- | 1-4 | |
| A | JP 06 043893 A (MATSUSHITA ELECTRIC IND CO LTD) 18. Februar 1994 (1994-02-18) * Zusammenfassung * ----- | 1-4 | |
| D,A | TSCHIRK W: "NEURAL NET SPEECH RECOGNIZERS - VOICE REMOTE CONTROL DEVICES FOR DISABLED PEOPLE" ELEKTROTECHNIK UND INFORMATIONSTECHNIK, SPRINGER VERLAG, WIEN, AT, Bd. 118, Nr. 7/8, 2001, Seiten 367-370, XP008045769 ISSN: 0932-383X * Abschnitt 1 * ----- | 1-4 | **RECHERCHIERTE SACHGEBIETE (IPC)** G10L |

Der vorliegende Recherchenbericht wurde für alle Patentansprüche erstellt

| Recherchenort | Abschlußdatum der Recherche | Prüfer |
|---|---|---|
| München | 28. April 2008 | Tilp, Jan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

EP 2 040 249 A1

## ANHANG ZUM EUROPÄISCHEN RECHERCHENBERICHT
## ÜBER DIE EUROPÄISCHE PATENTANMELDUNG NR.

EP 07 11 6840

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2008

| Im Recherchenbericht angeführtes Patentdokument | | Datum der Veröffentlichung | Mitglied(er) der Patentfamilie | | Datum der Veröffentlichung |
|---|---|---|---|---|---|
| WO 2005059896 | A | 30-06-2005 | AT | 414283 B | 15-11-2006 |
| | | | EP | 1695336 A1 | 30-08-2006 |
| JP 6043893 | A | 18-02-1994 | JP | 2502880 B2 | 29-05-1996 |

EPO FORM P0461

Für nähere Einzelheiten zu diesem Anhang : siehe Amtsblatt des Europäischen Patentamts, Nr.12/82

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005059896 A1

**In der Beschreibung aufgeführte Nicht-Patentliteratur**

- **W. TSCHIRK.** Neural Net Speech Recognizers. Voice Remote Control Devices for Disabled People. *e&i Artificial Intelligence,* 2001, 367-370